# EUROPEAN PATENT APPLICATION

(11) **EP 4 703 455 A1**
(43) Date of publication of application: **04.03.2026**
(21) Application number: 24306412.8
(22) Date of filing: 29.08.2024
(51) Int. Cl.: C09K 17/10, C04B 14/36, C04B 28/02, E01C 3/04

(54) **TREATMENT PROCESS FOR THE STABILIZATION OF SOILS**

(71) Applicant: Holcim Technology Ltd, 6300 Zug (CH)
(72) Inventor: MOVAHEDRAD, Mehran, 38070 Saint Quentin Fallavier (FR); TAPSOBA, Nouffou, 38070 Saint Quentin Fallavier (FR); RICHARD, Nicolas, 38070 Saint Quentin Fallavier (FR); CHARVOLIN, Jean-Pierre, 38070 Saint Quentin Fallavier (FR)
(74) Representative: Regimbeau

(57) **Abstract**

The invention relates to a process for stabilizing soil, comprising (i) pre-treating the soil with calcium carbide slag, then (ii) treating the pre-treated soil of step (i) with a hydraulic road binder. The invention further relates to the use of calcium carbide slag as pre-treatment for stabilizing soil.

## Description

The present disclosure relates to a process for stabilizing soils, in particular soils presenting a high plasticity index, comprising a pre-treatment of the soil with calcium carbide slag followed by the addition of a hydraulic road binder.

### BACKGROUND OF THE INVENTION

Soils with high plasticity index (PI) pose significant challenges in construction and engineering projects. These soils, often rich in clay minerals, exhibit plastic behavior, swelling, and shrinkage properties. Black Cotton Soil (BCS) is a prime example of such problematic soil. BCS not only possesses high PI but also organic matter and suffers from low strength, making it unsuitable for construction purposes. In road projects when this type of highly expansive soil is encountered, they are removed and replaced with granular materials.

High amounts of Portland clinker-comprising binders, typically hydraulic road binders, are typically used to stabilize such soils.

However, the production of Portland clinker needs high amounts of energy, thereby generating high amounts of CO₂.

There is therefore a need to develop solutions that would allow for stabilization of soils with high plasticity index while reducing the amount of hydraulic road binder used.

Lime and quick lime are solutions are known from the state of the art to reduce the amount of binder that is necessary for stabilizing the soil. However, production of lime in kilns requires high amounts of energy and therefore is unsuitable for providing an energy and CO₂ emissions mitigating solution.

There is therefore a need to find alternative materials to be used to stabilize soil in order to replace Portland clinker and/or lime without deteriorating the mechanical properties of the stabilized soil.

### SUMMARY OF THE INVENTION

It was surprisingly found by the inventors that a pre-treatment of the soil with calcium carbide slag followed by the treatment with a hydraulic road binder addresses the above need.

Advantageously, the pre-treatment according to the invention not only limits the amounts of Portland clinker required, thereby providing a more energy efficient and environmentally friendly method for stabilizing soil, but also maintains or even improves the mechanical properties of the stabilized soil obtained. More advantageously, the pre-treatment according to the invention provides an at least as advantageous, if not more advantageous, mechanical stabilization of the soil, compared to a soil treated with lime.

The inventors have demonstrated that, compared to a treatment comprising hydraulic road binder alone, the two-step treatment according to the invention leads to a stabilized soil having improved mechanical properties. Interestingly, the inventors have also demonstrated that, compared to a treatment comprising a combination of calcium carbide slag and hydraulic road binder, the two-step treatment according to the invention results in stabilized soil having improved mechanical properties while reducing the amount of binder used.

Even more advantageously, the incorporation of calcium carbide slag allows the reduction of industrial by-product handling by valorizing calcium carbide residues in soil stabilization.

The inventors have further found that the two-step treatment according to the invention is suitable not only for Black Cotton Soils but also for any soils.

In a first aspect, the invention relates to a process for stabilizing soil, comprising:
i. pre-treating the soil with calcium carbide slag, then
ii. treating the pre-treated soil of step (i) with a hydraulic road binder.

Advantageously, the hydraulic road binder is a hydraulic road binder as defined in NF EN 13282-1 of May 2014 or NF EN 13282-2 of September 2015. In some embodiments, the hydraulic road binder is a CEM II as defined in NF EN 197-1 of April 2012, preferably a CEM II B/L cement.

Advantageously, the pre-treatment step (i) comprises contacting the soil with calcium carbide slag for at least 2 hours and up to 7 days.

The pre-treatment step (i) may advantageously comprise mixing the soil with calcium carbide slag, in an amount ranging from 0.5 to 7 wt. % of calcium carbide slag, by weight relative to the amount of the dry soil weight. Preferably, the pre-treatment step (i) consists in mixing the soil with calcium carbide slag, in an amount ranging from 1 to 6 wt. % of calcium carbide slag, by weight relative to the amount of the dry soil weight.

The treatment step (ii) may advantageously consist in mixing the pre-treated soil with the hydraulic road binder, in an amount ranging from 2 to 15 wt. %, preferably from 3 to 10 wt.% of hydraulic road binder, by weight relative to the amount of the dry soil weight.

The process of the invention may further comprise step (iii) consisting in compacting the treated soil obtained in step (ii).

The soil to be treated by the process according to the invention is an unstable soil. Advantageously, it can be an unstable soil characterized by:
- having plasticity index greater than 20 according to standard NF EN ISO 17892-12 of March 2022, and/or
- being clay-rich having a Methylene Blue Value greater than 4 g/100g of dry soil, according to standard NF EN 17542-3 of June 2022, and/or
- containing more than 0.3 wt.% of total organic carbon, and/or
- having 35 wt.% or more of fines, defined by the weight ratio, relative to the total dry mass of the soil, of the particles passing 0.08 mm on a dry sieve, according to standard NF EN 933-1 of May 2012;
preferably, the unstable soil being an A4 soil according to the GTR standard NF P 11 300 (September 1992).

According to some advantageous embodiments, the unstable soil is a black cotton soil. According to a second aspect, the invention relates to a process for constructing a civil engineering structure, comprising the process steps of stabilizing soil according to any one of the above embodiments, prior to constructing the engineering structure.

According to a third aspect, the invention relates to the use of calcium carbide slag as a pre-treatment agent for stabilizing soil, as described in any one of the above embodiments of the pre-treatment step (i), wherein the use further comprises a subsequent treatment step (ii) with a hydraulic road binder.

Advantageously, the calcium carbide slag is present in an amount ranging from 0.5 to 7 wt. % of calcium carbide slag, by weight relative to the amount of the dry soil weight.

### DEFINITIONS

**Hydraulic Road Binder (HRB)** As specified in the standards NF EN 13282-1 of May 2014 or NF EN 13282-2 of September 2015, Hydraulic Road Binders are intended for the treatment of aggregates and soils for the production of road beds, forming of layers and terraces.

**Soil or ground:** the term "soil" or "ground" means a more or less friable material predominantly made up of earth and/or sand and/or clay in all possible proportions. The soil may be dry or wet. A wet soil contains water.

**MBVs:** Methylene Blue Value, indicates the clay content of the soil. It is measured according to standard NF EN 17542-3 of June 2022.

**PI:** Plasticity index is a characteristic property of very fine or clayey soil elements. The plasticity index PI measures the extent of the water content range in within which the soil is in a plastic state. It is obtained by subtracting the plastic limit (PL) from the liquid limit (LL). The LL characterizes the transition between a plastic state and a liquid state. The PL characterizes the transition from a solid state to a plastic state. These indices are determined according to standard NF EN ISO 17892-12 of March 2022.

**Passing at 0.08 mm:** the fines content of the soil, determined by dry sieving in accordance with standard NF EN 933-1 of May 2012. The fines content is expressed as a weight ratio relative to the total dry mass of the soil.

**Unstable soil:** soil containing a certain amount of clay, a high plasticity index and fines passing at 0.08 mm, making it unsuitable as a support for construction. According to specific embodiments, a soil is considered as unstable if the passing at 0.08 mm >35 % and the Plasticity Index > 25 (*Guide de terrassement routier* of June 2023). An unstable soil may contain organic carbon.

**GTR:** The GTR (Guide de Terrassement Routier) of July 2000 is a guideline for soil classification and recommendations for use in earthwork applications. In particular, the purpose of this guide is to define a classification of materials (soils, rock materials, industrial by-products) usable in the construction of embankments and subgrade layers of road infrastructures, in terms of the criteria representative of the problems posed by their use, in particular the plasticity index, passing at 0.08 mm, clay and organic content.

### DETAILED DESCRIPTION

It was surprisingly found that a pre-treatment of the soil with calcium carbide slag followed by the treatment with a hydraulic road binder provides an advantageous soil stabilization.

According to a first aspect, the present disclosure relates to a process for stabilizing soil, comprising:
i. pre-treating the soil, with calcium carbide slag, then
ii. treating the pre-treated soil of step (i) with a hydraulic road binder (HRB).

Without willing to be bound by a theory, the calcium carbide slag pre-treatment provides a cation exchange between soil particles and cementitious materials such as sodium from the unstable soil, such as black cotton soil, and calcium from cementitious materials. This can result in an equilibrium between clayey layer charge and reduction of dispersion force between soil layers. When the dispersion force between clayey layers is reduced, the soil particles become closer to each other, and a flocculated and agglomerated matrix can be formed. Still without being bound to a theory, this feature may also contribute to the changes in physical properties and granulometry of the treated soil.

### Pre-treatment step

In the context of the present disclosure, treating or pre-treating is understood to mean contacting the (pre)treatment, calcium carbide slag or HRB, with the soil or pre-treated soil, respectively.

Contacting calcium carbide slag with the soil can be understood as any means, within the art, suitable for bringing mass of calcium carbide slag into contact with the soil in orderto maximize the surface contact of calcium carbide slag with the soil to be pre-treated according to the invention. In some embodiments, contacting means mixing calcium carbide slag with the soil. Typically, contacting calcium carbide with the soil comprises transferring calcium carbide slag from the storage container of a spreading vehicle, spreading calcium carbide slag on the soil to be pre-treated and mixing the calcium carbide slag with the soil to be pre-treated, for example by using a rotary mixer.

Advantageously, step (i) consists in mixing the soil with calcium carbide slag, in an amount ranging from 0.5 to 7 wt. % of calcium carbide slag, preferably from 1 to 6 wt. %, more preferably from 2 to 5 wt.%, by weight relative to the amount of the dry soil weight. In a particular embodiment, step (i) consists in mixing the soil with calcium carbide slag, in an amount of 4 wt.%, by weight relative to the amount of the dry soil weight.

Calcium carbide Slag (CCS), also called calcium carbide residue (CCR), is the by-product of the acetylene manufacturing process by hydrolysis of calcium carbide. Handling CCS can be challenging in terms of industrial resources and cost.

Calcium carbide slag may comprise from 10 wt. % to 95 wt. %, preferably from 40 wt.% to 80 wt.%, more preferably from 50 wt.% to 70 wt. % of calcium hydroxide (Ca(OH)₂), by weight relative to the total weight of the CCS. Optionally, calcium carbide slag may be ground prior to being put in contact with the soil. In some embodiments, calcium carbide slag particles have i) a D90 ranging from 70 µm to 90 µm, preferably from 75 µm to 85 µm and/or a D50 ranging from 10 µm to 30 µm, preferably from 15 µm to 25 µm.

Calcium carbide slag may have a moisture content from 0 wt. % to 90 wt. %, measured according to: NF EN 1097-5 of October 2008 and expressed by weight relative to the total weight of CCS. Optionally, calcium carbide slag may be air-dried or oven-dried. Optionally, calcium carbide slag may be dried. Preferably, calcium carbide slag has a moisture content of less than 30 wt. %. More preferably, calcium carbide slag has a moisture content of less than 15wt.%.

Advantageously, the pre-treated soil of step (i) is allowed to set for at least 2 hours, preferably for at least 4 hours, more preferably at least 6 hours; and up to 7 days, preferably up to 5 days, more preferably up to 3 days. In a particular embodiment, the pre-treated soil of step (i) is left to set from 6 hours to 3 days, preferably 3 days.

Advantageously, the pre-treated soil of step (i) is allowed to set at ambient temperature, typically from 18°C to 40°C, and ambient atmospheric pressure, such as for example 1 atm.

### Treatment step

As per in the case of step (i), the same applies to the treatment step (ii), which consists in treating, i.e. contacting the hydraulic road binder (HRB) with the pre-treated soil of step (i) by mixing, typically by transferring HRB from the storage container of a spreading vehicle, spreading HRB on the pre-treated soil to be treated, and mixing the HRB with the pre-treated soil to be treated, for example by means of a rotary mixer

Advantageously, step (ii) consists in mixing the pre-treated soil of step (i) with HRB, in an amount ranging from 2 to 15 wt. % of HRB, preferably from 3 to 10 wt%, such as 4 wt.%, by weight relative to the amount of the dry soil weight.

Advantageously, the pre-treated soil of step (i) is allowed to set at ambient temperature, typically from 18°C to 40°C, and ambient atmospheric pressure, such as for example 1 atm.

The HRB can be any HRB defined in the standards NF EN 13282-1 of May 2014 or NF EN 13282-2 of September 2015. In some embodiments, the HRB is a CEM II binder as defined in NF EN 197-1 of April 2012, preferably CEM II/ B/L.

HRB comprises main constituents, the proportion of which exceeds 10% by weight, and which are selected from:
a) the constituents described in the cement standard NF EN 197-1 of April 2012 or the NF EN 197-5 of May 2021 standard;
b) lime.

A hydraulic road binder (HRB) according to the disclosure is also any binder obtained by mixing Portland clinker with any of the components described in the standard on hydraulic road binders (NF EN 13282-1 of April :2014 and NF EN 13282-2 of May2015).

Optionally, the binder comprises at least 10 wt. % of lime, by weight relative to the total weight of the binder. More advantageously, the binder comprises from 10 wt. % to 40 wt. % of lime, by weight relative to the total weight of the binder.

The lime may be calcium oxide, calcium hydroxide, magnesium oxide, magnesium hydroxide or mixtures thereof.

Advantageously, the binder comprises at least 10 wt. % of Portland clinker, by weight relative to the total weight of the binder. More advantageously, the binder comprises from 10 wt. % to 90 wt.% of Portland clinker, more advantageously from 40 wt. % to 70 wt. %, by weight relative to the total weight of the binder.

The binder may also comprise blast furnace slag, advantageously in a content ranging from 10 wt. % to 50 wt.%, and preferably from 10 wt.% to 30%, by weight relative to the total weight of the binder.

The binder may also comprise fly ash, in particular siliceous fly ash, advantageously in a content ranging from 5 wt. % to 40 wt. %, preferably from 10 wt.% to 25 wt. %, by weight relative to the total weight of the binder.

The binder may include secondary constituents, each not exceeding 10 wt. % by weight relative to the total weight of the binder, as defined in standard NF EN 13282-1 of May 2014. As indicated in the standards, calcium sulfate can be added to these main and secondary constituents.

The main constituents present in the binder, as described in the cement standard NF EN 197-1 of April 2012, are also called "cement".

The process may optionally further comprise a step (iii) consisting of compacting the treated soil. The optional step (iii) may be carried out by using equipment and methods known in the field of road engineering. Suitable types of equipment to be used for soil compaction include, but are not limited to rammers and trench rollers, walk-behind rollers, or forward/reversible plates.

The process may optionally further comprise step (iv) of applying a surface protection to the treated soil of step (ii) or the compacted soil of step (iii). The surface protection allows the finished surface to remain moist allowing for sufficient hydration of the hydraulic road binder. Step (iv) may include moisturizing the compacted soil by spreading the surface with water, applying a bituminous emulsion or wet sand, or covering the compacted soil with a polymeric film.

### Soil

Advantageously the soil to be stabilized according to the invention is an unstable soil, in particular a soil that presents insufficient mechanical properties to provide a support for a construction.

According to some embodiments, a soil that be characterized as an unstable soil may:
- having plasticity index greater than 20 according to standard NF EN ISO 17892-12 of March 2022, and/or
- being clay-rich having a Methylene Blue Value greater than 4 g/100g of dry soil, according to standard NF EN 17542-3 of June 2022, and/or
- containing more than 0.3 wt.% of total organic carbon, and/or
- having 35 wt.% or more of fines, defined by the weight ratio, relative to the total dry mass of the soil, of the particles passing 0.08 mm on a dry sieve, according to standard NF EN 933-1 of May 2012;

According to some embodiments, the soil is a fine soil with high clayey content, characterized by:
- a plasticity index of more than 25, and
- present an MBV of more than 6 g/100g of dry soil.

Typically, the fine soil with high clay content may further contain more than 0.5 wt.% of total organic carbon according to the standard method of DIN 19539 of December 2016. According to some preferred embodiments, the soil is a black cotton soil (BCS). Typically, BCS is a soil having:
- a plasticity index greater than 20 according to the standard NF EN ISO 17892-12 of March 2022, and
- an MBV greater than 6 g/100 g of dry soil, and
- more than 0.5 wt.% of total organic carbon

According to some preferred embodiments, the soil is an A3 or A4 soil as defined in the GTR Standard NF P 11 300 of September 1992.

Advantageously, the process of the invention leads to the improvement of the treated soil obtained in step (ii), thereby providing a stabilized soil.

In some embodiments, the stabilized soil is acceptable according to the European standards for stabilized soil.

The acceptance of stabilized soil in Europe can be determined as follows:
- Acceptance criteria for soaked CBR and IBI (according to GTS (Guide de Traitement des Sol - 2000) as standard:
   ■ Soaked CBR/ IBI >1
   and,
- Trafficability
   ∘ Site traffic is permitted when the Rc ≥ 1 Mpa (1.5 MPa to 2 MPa for important heavy vehicles). The duration for which this requirement is satisfied is obtained by interpolation between the Rc values, measured at 2, 7 and 28 days.
   and,
- Resistance to moisture is considered satisfactory, depending on the clay material, measured by the Methylene Blue Value (MBV):
   ∘ a) Rci/Rc60 ≥ 0.8 (if the MBV of the soil is ≤ 0.5)
   ∘ b) Rci/Rc60 ≥ 0.6 (if when the MBV of the soil is > 0.5)
   and
The suitability for treatment is evaluated on the basis of Volumetric Swelling (VS) according to NF-EN 13286-49 of October 2004 and Indirect Tensile Strength (ITS) according to NF-EN 13286-42 of September 2003 as follows

| Suitability to treatment | Volumetric Swelling VS (%) | Indirect tensile strength ITS (MPa) |
|---|---|---|
| Suitable | VS<5 | ITS > 0.2 |
| Doubtful | 5<VS<10 | 0.1<ITS<0.2 |
| Unsuitable | VS>10 | ITS<0.1 |

### Construction process

According to a second aspect, the invention relates to a process for constructing a civil engineering structure, comprising stabilizing the process steps for stabilizing soil according to any one of the above embodiments, and then constructing said structure.

Exemplary structures may encompass, roads, airports, railroads or any other infrastructure requiring geotechnical improvements.

Typically, the soil stabilization process steps are carried out prior to placing the road foundations and the surfacing layer of the construction.

### Use of calcium carbide slag

According to a third aspect, the invention relates to the use of calcium carbide slag as a pre-treatment agent for stabilizing soil, as described in any one of the embodiments of the pre-treatment step (i) section above, wherein the use further comprises a subsequent treatment step (ii).

The following non-restrictive examples illustrate embodiments of the invention.

### General methods

The properties of the treated soil can be evaluated based on the following standard methods:
- Immediate bearing Index (IBI) (NF-EN-13286-47 of November 2021)
   - In the experimental section bellow, samples were compacted, and IBI was measured immediately after compaction
- Soaked California Bearing Ratio (soaked CBR) and swelling (NF-EN-13286-47 of November 2021)
   - In the experimental section bellow, soaked CBR was measured after leaving the samples 4 days in water
- Volumetric Swelling (VS)
   - Determined according to NF EN 13286-49 of October 2004 from the ratio between the initial and the final volume measured after 7 days of soaking in water at 40°C
- Indirect tensile strength (ITS)
   - Determined according to NF EN 13286-42 of September 2003 on samples after immersion in water at 40°C for 7 days
- Unconfined Strength test (UCS) (NF EN 13286-53 of May 2005 for molding NF-EN 13286-41 of November 2021 for testing)
   - In the experimental section below, samples were kept in a hermetic bag at 20°C and 90% of hydrometry in a climate chamber, and the UCS was calculated at 7 days, 28, and 60 days.
- Soaked UCS (NF-EN 13286-53of May 2005 for molding NF-EN 13286-41 of November 2021 for testing)
   - In the experimental section bellow, samples were kept in a hermetic bag at 20°C and 90% of hydrometry in a climate chamber for 28 days, then immersed in temperature-controlled bath at 20°C for 32 days.
- Total organic carbon (DIN 19539 of December 2016)

### Particle size distribution

In the present description and accompanying claims, the particle size distribution is measured by laser particle size analysis, e.g., using a Malvern MS2000 laser analyzer. The measurement is carried out in ethanol. The light source is a red He-Ne laser (632 nm) and blue diode (466 nm). The optical model is the Mie model and the computing matrix of polydisperse type. The apparatus is calibrated before each working session with a standard sample (C10 silica, Sibelco) of known particle size distribution. Measurement is carried out with the following parameters: pump rate 2000 rpm and stirrer speed of 800 rpm. The sample is positioned to obtain 10 to 20 % obscuration. Measurement is conducted after stabilization of obscuration. 100 % sonication is emitted for 2 minutes to ensure de-agglomeration of the sample. After about 30 seconds (to evacuate any air bubbles) the sample is measured for 20 seconds (20000 images analyzed). Without emptying the cell, the measurement is repeated at least twice to verify the stability of the result and evacuation of any bubbles.

All the measurements given in the description and specified ranges correspond to the mean values obtained with sonication.

D90, corresponds to the 90^{th} percentile of the particle size volume distribution, i.e. 90 % of the particles are of size less than D90 and 10 % are of size greater than D90. Likewise, Dx corresponds to the x^{th} percentile of the volume distribution of particle size i.e. x % of the particles are of size less than Dx and x % are of size greater than Dx.

### Loss on ignition

The sample is calcined at 950°C for45 minutes, allowing organic and volatile matter to escape, until its mass no longer changes. The loss on ignition (LOI), equal to the mass of the sample prior to calcination, m₀, minus the mass of the sample after calcination, m₁, is then determined. The organic and volatile matter lost usually consist of "combined water" (hydrates and labile hydroxy-compounds), and carbon dioxide from carbonates or carbon. Sulfur from sulfides may also be partly volatilized.

### Chemical analysis

The chemical analysis of CCR is carried out by wavelength dispersive X-ray fluorescence analysis (WDS - XRF).

A qualitative analysis by X-ray diffraction is done with the following parameters:
- DX Bruker D8 Advance - copper tube.
- Power: 40 mA × 25 kV.
- Continuous scan from 3 to 65°
- Program: 10min step: 4336, time per step: 0.135s
- sample rotation

### Examples

### Abbreviations:

BCS: Black Cotton Soil
CBR: California Bearing ratio
CCR: Calcium Carbide Residue (= CCS: Calcium carbide Slag)
CK: Clinker
d: days
HRB: Hydraulic Road Binder
IBI: Immediate Bearing Index
ITS: Indirect tensile strength (MPa)
MBVs: Methylene Blue Value of soil (g/100g of dry soil)
PI: Plasticity Index
PT: Pre-treatment (wt.% relative to the dry weight of the soil)
Rci/Rc60: value of soaked UCS at 60 days/ value of UCS at 60 days
T: Treatment (wt.% relative to the dry weight of the pre-treated soil)
TOC: Total organic carbon, (wt.% relative to the dry weight of the soil)
UCS: Unconfined Strength Test (MPa), also designated as Rc
VS: Volume swelling, expressed as a percentage compared to the initial volume

### Materials:

### Soil characteristics:

Table 1. Characterization criteria to consider a soil as difficult in our study based on the two black-cotton-soil soils from Nigeria that were used in the experimental section:

**Table 1.**

| Factors | Criteria | Soil 1 | Soil 2 |
|---|---|---|---|
| PI | > 25 | 46 | 50 |
| MBV | > 6 | 7 | 8.9 |
| TOC | >0.5% | 1.1 | 1.09 |

The HRB was a CEM II B/L 32.5 N cement.

Calcium carbide slag (CCR) was sourced from Malogoszcz, Poland. The particles of the exemplary composition exhibited a D90 of 83.4 µm, a D50 of 23.1 µm and a D10 of 4.9 µm. The XRF analysis and the Loss on Ignition (LOI) of the CCR are presented in Table 2 below.

**Table 2**

| Formula | wt. % by weight of the CCR weight |
|---|---|
| SiO₂ | 3.07 |
| Al₂O₃ | 1.58 |
| Fe₂O₃ | 0.84 |
| CaO | 66.98 |
| MgO | 0.77 |
| K₂O | <0.05 |
| Na₂O | <0.05 |
| SO₃ | 0.82 |
| TiO₂ | 0.06 |
| Mn₂O₃ | 0.06 |
| P₂O₅ | <0.05 |
| Cr₂O₃ | <0.05 |
| ZrO₂ | <0.05 |
| SrO | <0.05 |
| LOI | 26.2 |

### Example 1: Effect of Calcium Carbide slag pre-treatment on Soil 1

Soil 1 was subjected to the treatments presented in the first column of Tables 2 -4 below. Table 3 presents the IBI, CBR values and their ratios for the treated Soil 1 samples.

**Table 3.**

| Treatment | Type of treatment and dosage | | | IBI (%) without curing | Soaked CBR (%) without curing | Soaked CBR/IBI |
|---|---|---|---|---|---|---|
| | PT | time of PT | T | | | |
| No treatment | - | | - | 11.7 | 3.6 | 0.3 |
| HRB [T] | - | - | 8% | 16.9 | 33.7 | 2 |
| HRB [PT] + HRB [T] | 4% | 24h | 4% | 20.6 | 80.4 | 3.9 |
| Ca(OH) ₂ [PT] + HRB [T] | 4% | 24h | 4% | 16.4 | 60.1 | 3.7 |
| **CCR [PT] + HRB [T]** | **4%** | **24h** | **4%** | **26.4** | **97.5** | **3.7** |
| CaO [PT] + HRB [T] | 4% | 24h | 4% | 32.2 | 88.5 | 2.8 |

Table 4 presents ITS of the treated Soil 1 samples and swelling percentage.

**Table 4.**

| Treatment | Type of treatment and dosage | | | ITS (MPa) without curing | Swelling (%) without curing |
|---|---|---|---|---|---|
| | PT | time of PT | T | | |
| No treatment | - | | - | NA | NA |
| HRB [T] | - | - | 8% | 0.13 ± 0.01 | 1.9 |
| HRB [PT] + HRB [T] | 4% | 24h | 4% | 0.11 ± 0.02 | 0.3 |
| Ca(OH)₂ [PT] + HRB [T] | 4% | 24h | 4% | 0.21 ± 0.02 | -1.3 |
| **CCR [PT] + HRB [T]** | 4% | **24h** | 4% | **0.22 ± 0.02** | **-0.3** |
| CaO [PT] + HRB [T] | 4% | 24h | 4% | 0.22 ± 0.01 | -1.7 |

Table 5 presents the UCS values of the treated Soil 1 samples.

**Table 5.**

| Treatment | Type of treatment and dosage | | | UCS (MPa) | | | Soaked UCS (MPa) | Rci/ Rc60 |
|---|---|---|---|---|---|---|---|---|
| | | | | 7 d | 28 d | 60 d | 60 d | |
| | PT | time of PT | T | | | | | |
| No treatment | - | - | - | NA | NA | NA | NA | |
| HRB [T] | - | - | 8% | 0.58 ± 0.07 | 0.87 ± 0.15 | 1.12 ± 0.19 | 0.9 ± 0.07 | 0.78 |
| HRB [PT] + HRB [T] | 4% | 24h | 4% | 0.66 ± 0.07 | 0.71 ± 0.08 | 1.43 ± 0.08 | 0.9 ± 0.09 | 0.65 |
| Ca(OH)₂ [PT] + HRB [T] | 4% | 24h | 4% | 0.84 ± 0.14 | 1.18 ± 0.20 | 1.39 ± 0.22 | 1.4 ± 0.33 | 1.02 |
| **CCR [PT]** + **HRB [T]** | **4%** | **24h** | **4%** | **1.01 ± 0.06** | **1.12 ± 0.18** | **1.73 ± 0.30** | **1.4 ± 0.16** | **0.8** |
| CaO [PT] + HRB [T] | 4% | 24h | 4% | 0.64 ± 0.11 | 0.77 ± 0.10 | 1.38 ± 0.09 | 1.2 ± 0.20 | 0.85 |

Compared to the reference treatment (8% HRB as a sole treatment), the application of the CCR pre-treatment followed by the application of HRB 24h after the application of pre-treatment results in the best compressive strength results.

The comparative example with 8% HRB application, where 4% is applied as pre-treatment and 4% as main treatment 24h after the pre-treatment application, shows that the use of calcium carbide slag as pre-treatment agent results in better performance.

Furthermore, it should be noted that the treatment according to the invention further results in comparable or even better long-term strength (7 and 60 days) compared to alternative and energy-consuming, pre-treatment agents such as calcium hydroxide or calcium oxide.

### Example 2: CCR pre-treatment effect on Soil 2 - assessment of the pre-treatment duration

Soil 2 was subjected to the treatments presented in the first column of table 6 below. Table 6 further presents the UCS of the treated Soil 2 samples.

**Table 6.**

| Treatment | | Type of treatment and dosage | | | UCS (MPa) | |
|---|---|---|---|---|---|---|
| | | | | | 7 d | 28 d |
| | | PT | time of PT | T | | |
| One step treatment | CCR [T] | - | - | 8% | 0.39 ± 0.05 | 0.51 ± 0.02 |
| | CCR (4%) + HRB (4%) | - | - | 8% | 0.49 ± 0.03 | 0.62 ± 0.01 |
| Two-step treatment | **CCR [PT]** + **HRB [T]** | 4% | 6h | 4% | 0.66 ± 0.02 | 0.86 ± 0.05 |
| | **CCR [PT] + HRB [T]** | 4% | 24h | 4% | 0.81 ± 0.09 | 1.07 ± 0.12 |
| | **CCR [PT] + HRB [T]** | 4% | 72h | 4% | 1.05 ± 0.07 | 1.19 ± 0.08 |
| | **CCR [PT] + HRB [T]** | 4% | 7 d | 4% | 0.65 ± 0.07 | 0.84 ± 0.02 |
| | HRB [PT] + CCR [T] | 4% | 24h | 4% | 0.41 ± 0.01 | 0.51 ± 0.08 |

The comparative example using HRB as pre-treatment and CCR as the main treatment applied at the same rate 24h after pre-treatment, as well as the comparative example allowing CCR as the sole treatment, underline the importance of the sequential application of the CCR pre-treatment followed by the hydraulic road binder treatment according to the invention.

Furthermore, although the sequential treatment is more effective even within 4h of pre-treatment with CCR, Example 2 indicates an advantageous time frame for the pretreatment duration ranging from 24h to 72h.

## Claims

1. Process for stabilizing soil, comprising:
i. pre-treating the soil with calcium carbide slag, then
ii. treating the pre-treated soil of step (i) with a hydraulic road binder.

2. The process according to claim 1, wherein the hydraulic road binder is a hydraulic road binder as defined in NF EN 13282-1 of May 2014 or NF EN 13282-2 of September 2015.

3. The process according to claim 1 or claim 2, wherein the hydraulic road binder is a CEM II as defined in NF EN 197-1 of April 2012, preferably CEM II B/L cement.

4. The process according to any one of claims 1 to 3, wherein the pre-treatment step (i) comprises contacting the soil with calcium carbide slag for at least 2 hours and up to 7 days.

5. The process according to any one of claims 1 to 4, wherein the pre-treatment step (i) consists in mixing the soil with calcium carbide slag, in an amount ranging from 0.5 to 7 wt. % of calcium carbide slag, by weight relative to the amount of the dry soil weight.

6. The process according to any one of claims 1 to 5, wherein the pre-treatment step (i) consists in mixing the soil with calcium carbide slag, in an amount ranging from 1 to 6 wt. % of calcium carbide slag, by weight relative to the amount of the dry soil weight.

7. The process according to any one of claims 1 to 6, wherein the treatment step (ii) consists in mixing the pre-treated soil with the hydraulic road binder, in an amount ranging from 2 to 15 wt. %, preferably from 3 to 10 wt.% of hydraulic road binder, by weight relative to the amount of the dry soil weight.

8. The process according to any one of claims 1 to 7, further comprising step (iii) of compacting the treated soil of step (ii).

9. The process according to any one of claims 1 to 8, wherein the soil is an unstable soil:
- having a plasticity index greater than 20 according to standard NF EN ISO 17892-12 of March 2022, and/or
- being clay-rich having a Methylene Blue Value greater than 4 g/100g of dry soil, according to standard NF EN 17542-3 of June 2022, and/or
- containing more than 0.3 wt.% of total organic carbon, and/or
- having 35 wt.% or more of fines, defined by the weight ratio relative to the total dry mass of the soil of particles passing at 0.08 mm by dry sieving according to standard NF EN 933-1 of May 2012;
preferably the unstable soil being an A4 soil according to the GTR standard NF P 11 300 (September 1992).

10. The process according to claim 9, wherein the unstable soil is a black cotton soil.

11. A process for constructing a civil engineering structure, comprising stabilizing the soil according to any one of claims 1 to 10, prior to constructing said engineering structure.

12. Use of calcium carbide slag as a pre-treatment agent for stabilizing soil, wherein the use further comprises a subsequent treatment of the calcium carbide slag-pre-treated soil with a hydraulic road binder.

13. The use according to claim 12, wherein calcium carbide slag is in an amount ranging from 0.5 to 7 wt. % of calcium carbide slag, by weight relative to the amount of the dry soil weight.
